(19) Europäisches Patentamt

European Patent Office

Office européen des brevets

(11) **EP 4 485 297 A1**

(12) **EUROPEAN PATENT APPLICATION**

(43) Date of publication:
**01.01.2025 Bulletin 2025/01**

(21) Application number: **24184674.0**

(22) Date of filing: **26.06.2024**

(51) International Patent Classification (IPC):
***G06N 20/00*** (2019.01)     ***G06F 40/10*** (2020.01)
***G06N 3/0455*** (2023.01)

(52) Cooperative Patent Classification (CPC):
**G06N 20/00; G06N 3/0455**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.06.2023 US 202363510287 P**

(71) Applicants:
• **Services Pétroliers Schlumberger**
  **75007 Paris (FR)**
  Designated Contracting States:
  **FR**
• **GeoQuest Systems B.V.**
  **2514 JG The Hague (NL)**
  Designated Contracting States:
  **AL AT BE BG CH CY CZ DE DK EE ES FI GB GR
  HR HU IE IS IT LI LT LU LV MC ME MK MT NL NO
  PL PT RO RS SE SI SK SM TR**

(72) Inventors:
• **MANIKANI, Sunil**
  **411014 Pune (IN)**
• **FREEMAN, Stephen**
  **Leeds, LS1 5AA (GB)**

(74) Representative: **Aipex B.V.**
  **Vestdijk 51**
  **5611 CA Eindhoven (NL)**

(54) **GENERATION AND USE OF CLASSIFICATION MODEL FROM SYNTHETICALLY GENERATED DATA**

(57)     A method for training and using a field machine learning (ML) model to classify emission data is presented. The method includes generating synthetic data by a large language model (LLM) by prompting the LLM with emission classes and few shot examples. The synthetic data includes multiple synthetic data instances and corresponding instance labels. A training dataset is obtained from the synthetic data. The method further includes training the field ML model with training instances which are synthetic data instances from the training dataset and corresponding training labels. The field ML model generates a predicted probability distribution of a training output class corresponding to a training instance. The method further includes adjusting a model parameter weight of the field ML model to minimize a categorical cross-entropy loss function calculated based on the generated predicted probability distribution. The trained field ML model is used to classify emission data.

**EP 4 485 297 A1**

**Description**

CROSS REFERENCE TO RELATED APPLICATIONS

This application is a non-provisional application of, and thereby claims benefit under 35 U.S.C. § 119(e), to 63/510,287 filed on June 26, 2023, which is incorporated herein by reference.

BACKGROUND

The Greenhouse Gas (GHG) Protocol scope classifications refer to the diverse levels of GHG emissions that an organization or entity can account for when measuring and reporting their emissions. The GHG Protocol is a widely recognized accounting tool developed by the World Resources Institute (WRI) and the World Business Council for Sustainable Development (WBCSD) to standardize GHG emissions accounting and reporting. The GHG Protocol identifies three scope classifications, commonly known as Scope 1, Scope 2, and Scope 3 emissions. These scopes help organizations understand and categorize their emission sources, enabling them to develop comprehensive emission reduction strategies.

Scope 1 emissions are direct GHG emissions that occur from sources that are owned or controlled by the reporting organization. Scope 1 emissions may include emissions from activities such as burning fossil fuels on-site, operating company-owned vehicles, or emissions from owned or controlled industrial processes. Examples include emissions from a company's own power plants, boilers, or fleet vehicles.

Scope 2 emissions are indirect GHG emissions associated with the consumption of purchased electricity, steam, heating, or cooling by the reporting organization. Scope 2 emissions result from the generation of electricity or heat by external sources. When an organization consumes electricity, for example, it indirectly contributes to the emissions associated with the electricity generation. Scope 2 emissions are often considered more controllable by organizations, as they can choose to procure renewable energy or implement energy efficiency measures to reduce their indirect emissions.

Scope 3 emissions are the other indirect GHG emissions that occur as a consequence of an organization's activities but are not directly owned or controlled by the reporting organization. Scope 3 emissions are often the largest and most complex category, as they encompass a broad range of activities in the value chain, including emissions from purchased goods and services, business travel, employee commuting, waste disposal, and transportation of products. These emissions may be the result of activities upstream or downstream from the reporting organization.

Reliance on human effort in extracting, understanding, accurately categorizing and interpreting emissions data from exponentially growing, unstructured, and unclassified enterprise data poses a challenge to stay in compliance with the GHG Protocol and subsequently develop energy efficiency measures to reduce emissions.

SUMMARY

In general, in one aspect, one or more embodiments relate to a method. The method includes generating synthetic data by a large language model (LLM). The synthetic data includes multiple synthetic data instances and corresponding instance labels. A training dataset is obtained from the synthetic data. The method further includes training a field machine learning (ML) model with training instances which are synthetic data instances from the training dataset and corresponding training labels. The field ML model generates a predicted probability distribution of a training output class corresponding to a training instance. The method further includes calculating a categorical cross-entropy loss function based on the predicted probability distribution. The method further includes adjusting a model parameter weight of the field ML model to minimize the categorical cross-entropy loss function value.

In general, in one aspect, one or more embodiments relate to a system. The system includes at least one computer processor and a training engine. The training engine executing on the at least one computer processor is configured to cause a teaching LLM to generate synthetic data including multiple synthetic data instances and corresponding instance labels. The training engine is further configured to obtain a training dataset from the synthetic data and train a field ML model with training instances which are synthetic data instances and corresponding training labels of the training dataset. The field ML model is configured to generate a predicted probability distribution of a training output class corresponding to a training instance of the training dataset. The training engine is further configured to calculate a categorical cross-entropy loss function based on the predicted probability distribution. The training engine is further configured to adjust a model parameter weight of the field ML model to minimize the categorical cross-entropy loss function value.

In general, in one aspect, one or more embodiments relate to a method. The method includes generating synthetic data including multiple synthetic data instances and corresponding instance labels by a teaching LLM. The method further includes obtaining a training dataset from the synthetic data, including multiple training instances which are synthetic data instances and corresponding training labels by a training engine. The method further includes iteratively training a field ML model by the training engine by performing operations including providing, as training input to the field ML model, a first training instance and a corresponding first training label, generating, by the field ML model, a predicted probability distribution of a first training output class corresponding to the first training data instance, calculating, by the training engine, a categorical cross-entropy loss function based on the predicted probability distribution of the first training output class and adjusting at least one model parameter weight of the field ML model to minimize the categorical cross-entropy loss function value based on a gradient descent function. The iterative training process is halted by the training engine responsive to one of the calculated categorical cross-entropy loss function value not decreasing with successive iterations of training the field ML model, or the calculated categorical cross-entropy loss function value increasing with successive iterations of training the field ML model.

Other aspects of one or more embodiments will be apparent from the following description and the appended claims.

BRIEF DESCRIPTION OF DRAWINGS

FIG. 1 shows a computing system, in accordance with one or more embodiments.

FIG. 2 shows a flowchart of a method for training a field machine learning model with synthetic data, in accordance with one or more embodiments.

FIG. 3 shows a flowchart of a method for prompting a large language model to generate synthetic data, in accordance with one or more embodiments.

FIG. 4 shows an example of enterprise data classified by the field machine learning model, in accordance with one or more embodiments.

FIG. 5 shows an example of prompt engineering to generate synthetic data, in accordance with one or more embodiments.

FIG. 6A and FIG. 6B show a computing system in accordance with one or more embodiments.

Like elements in the various figures are denoted by like reference numerals for consistency.

DETAILED DESCRIPTION

One or more embodiments are directed to a method for training a classification model with synthetic data generated by a large language model (LLM), to classify real-world enterprise data with class labels from a set of pre-defined emission classes in accordance with the Greenhouse Gas (GHG) Protocol. LLMs are deep learning machine learning models specifically designed for natural language processing (NLP) tasks. LLMs recognize, translate, predict, or generate text and other content. LLMs are trained on immense datasets with a goal to gain advanced capabilities in understanding and working with natural language effectively.

Synthetic data refers to example data generated by an LLM. The synthetic data includes multiple synthetic data instances and labels corresponding to the synthetic data instances. The labels are from the set of pre-defined emission classes.

When deployed, the trained classification model is used to classify real-world data instances with labels from the set of pre-defined emission classes. A data instance refers to a data entity with one or more attributes, or features, and corresponding values (e.g., a "Customer" data entity has "name," "age," and "address" attributes or features and corresponding values "Jane Doe," "35", "123 First Street, Anytown, ST 54321").

To train the classification ML model, the synthetic data generated by the LLM is divided into training and testing datasets. The training dataset is used to train the classification ML model to classify data instances of the training dataset with labels from the set of pre-defined emission classes. Subsequently the classification ML model is further evaluated with the testing dataset. The classification ML model parameters are adjusted to minimize classification errors generated during evaluation. Training is halted when the classification ML model generates accurate classifications of data instances from the testing dataset within a pre-defined error margin.

The trained classification ML model is further deployed as a field ML model in the working environment of an enterprise. The field ML model is used to classify enterprise data, namely, real-world data generated from real events, including financial, operational, and technical data. More particularly, the field ML model identifies and labels enterprise data pertaining to emission scope and GHG Protocol. The field ML model further provides natural language explanations of the labels that the field ML model assigns to identified emission scope related data.

The LLM-generated synthetic data is not, in fact, recorded or generated from a real-world event or transaction, but nevertheless reflects a possible real-world scenario. In other words, synthetic data is artificially generated data pertaining to a particular domain that encompasses semantic interrelationships that parallel real-world data from that domain. Further, LLM-generated synthetic data can mirror the statistical properties of the real-world data domain of which the LLM-generated synthetic data is representative. Synthetic data generated by an LLM may include one or more labels that classify, or categorize, the data into a pre-defined set of classes. Thus, labeled synthetic data may be used to train and test machine learning models in the scenario where real-world data is generated on an exceptionally large scale and the manual effort required to add classification labels to real-world data to convert the real-world data into training datasets is not feasible or sustainable. Other cases where labeled synthetic data may be used to train and test machine learning models include a scarcity of real-world data, sensitive information included in the real-world data, or real-world data that presents a risk of causing the machine learning models to develop implicit bias.

A prompt refers to an instruction in one or more natural language sentences to the LLM. Prompt engineering involves writing and optimizing prompts that aim to cause LLMs to generate specific, high-quality responses. An LLM may be prompted in a prompting session. A prompting session is an interaction with an LLM, either via a graphical user interface (GUI) artifact (*e.g.*, a chat session between a user and an AI copilot) or via multiple programmatic calls via an application programming interface (API). The prompting session includes one or more prompts engineered to generate a specific outcome. In a prompting session, the LLM retains knowledge of the previous prompts and responses when processing a current prompt.

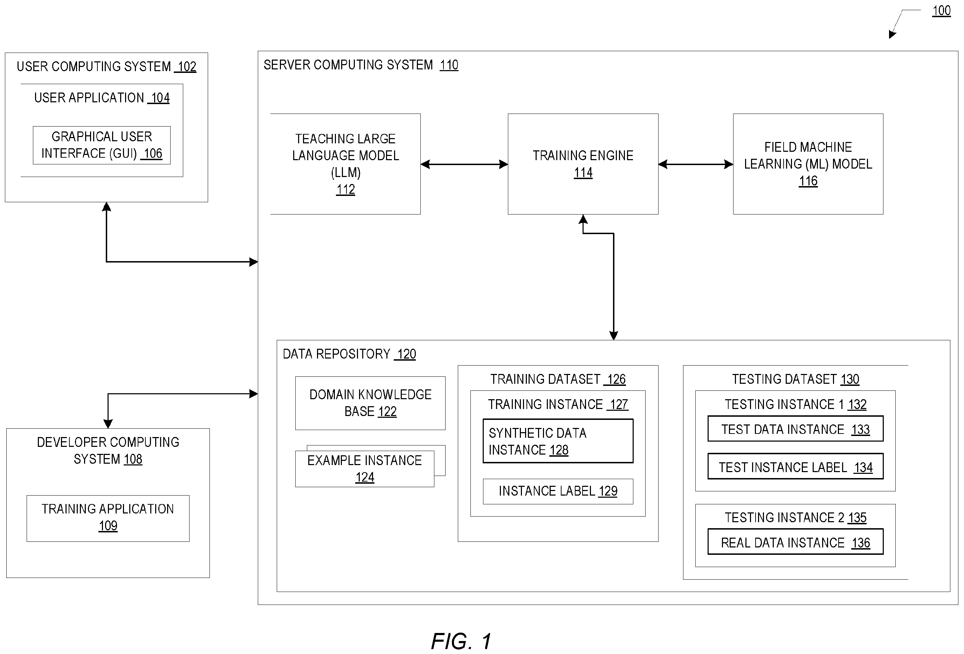

Attention is now turned to the figures. FIG. 1 shows a system (100), in accordance with one or more embodiments. The system (100) shown in FIG. 1 includes a user computing system (102), a developer computing system (108), and a server computing system (110). The server computing system (110) is communicatively coupled to the user computing system (102) and the developer computing system (108). Each of these systems are described herein.

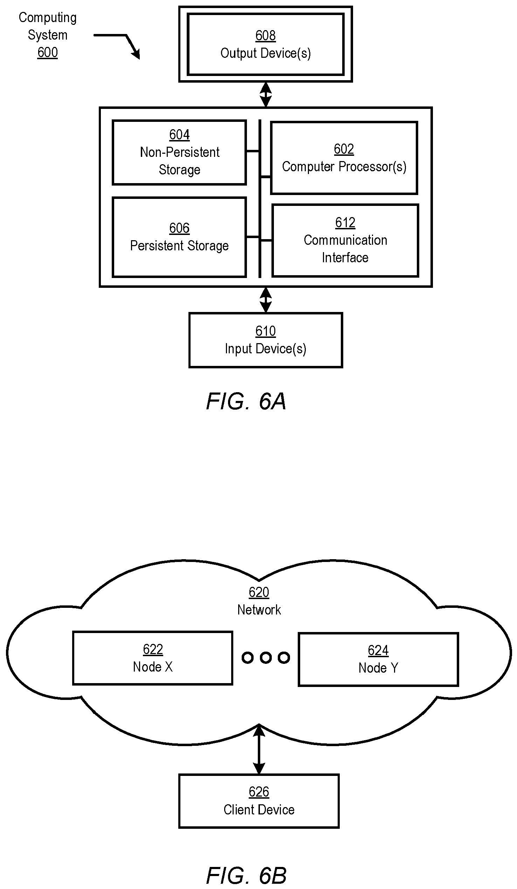

The user computing system (102) is a computing system with one or more computer processors, data repositories, communication devices, and supporting hardware and software. Examples of computer systems that may form the user computing system (102) are described with respect to FIG. 6A. The user computing system (102) is deployed in an enterprise for use by an employee or other worker. The user computing system (102) includes a user application (104). The user application (104) further includes a graphical user interface (GUI) (106) which presents the user with various GUI artifacts, for example, forms, dialog boxes, tables, *etc.,* to enter information, and for other interactions with the user application (104). The user application (104) includes functionality to generate enterprise data from raw data entered by a user via the GUI (106). Examples of user applications include enterprise applications such as spreadsheets, word processing applications, database applications, *etc.* The user application (104) transmits the enterprise data to the server computing system (110).

The developer computing system (108) is a computing system with one or more computer processors, data repositories, communication devices, and supporting hardware and software. Examples of computer systems that may form the developer computing system (108) are described with respect to FIG. 6A. The developer computing system (108) is deployed in an enterprise for developers of computer-executable applications. The applications may be deployed to execute in the server computing system (110). The developer computing system (108) includes one or more training applications (109). The training application (109) may include functionality to interact with large language models, and other machine learning models. More particularly, the training application includes functionality to train the field machine learning (ML) model (116), shown in FIG. 1. The trained field ML model (116) may be deployed in the server computing system (110). Further, the training application (109) may include functionality to interact with the teaching LLM (112), and the training engine (114). The training application may interact with the teaching LLM (112) and the field ML model (116) via the training engine (114) programmatically via application programming interface (API) calls, or directly through specialized training graphical user interface artifacts, for example, dashboards, artificial intelligence (AI) copilots, *etc.*

The server computing system (110) of the system (100) shown in FIG. 1 is a computing system with one or more computer processors, data repositories, communication devices, and supporting hardware and software. An example of one or more computer processors that may be part of the server computing system (110) is the computer processor(s) (602) described in reference to FIG. 6A. The one or more computer processors are hardware or virtual processors which may execute computer readable program code that defines one or more applications, including a teaching LLM (112), a training engine (114), and a field ML model (116). The server computing system (110) may be in a distributed computing environment. An example of a computer system and network that may form the server computing system (110) is described with respect to FIG. 6A and FIG. 6B.

As shown in FIG. 1, the server computing system (110) includes a teaching LLM (112). The teaching LLM (112) is an LLM. The teaching LLM (112) is operably and communicably coupled to the training engine (114). The teaching LLM (112) generates synthetic data which is used as training and testing datasets to train the field ML model (116).

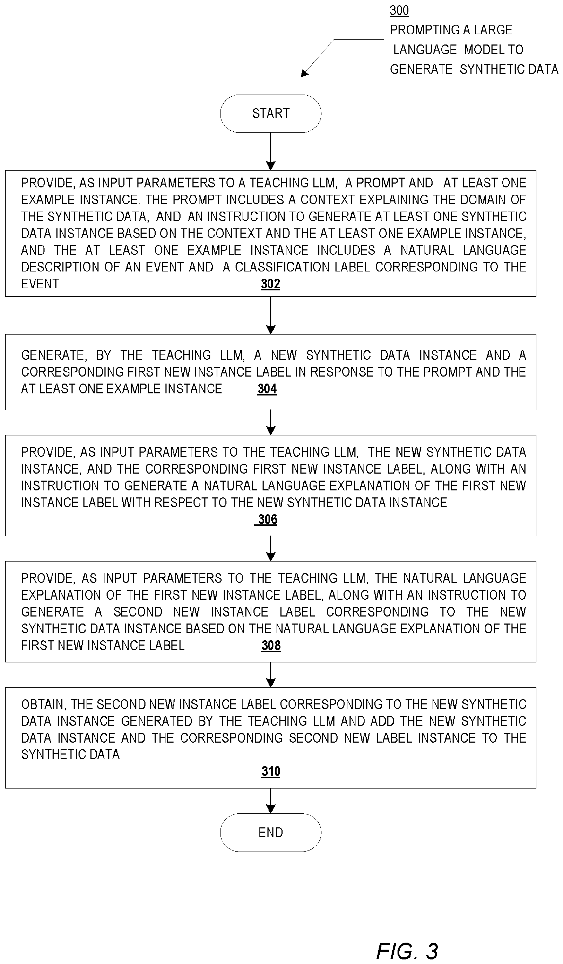

More specifically, the teaching LLM (112)'s built-in in-context learning ability is invoked via prompt engineering to generate synthetic data. In other words, the teaching LLM (112) generates synthetic data which "teaches" the field ML model to identify and label enterprise data pertaining to emission scope and GHG Protocol. An example of the teaching LLM (112) may be an LLM, such as ChatGPT®. Other examples of language models that may be used include Generative Pre-trained Transformer (GPT)-3.5®, GPT-4® from OpenAI, Llama3 from Meta®, Claude™ from Anthropic Pbc. Use of the teaching LLM (112) is described with respect to FIG. 3. The generation of synthetic data by the teaching LLM (112) is described in further detail in reference to flowchart 300 shown in FIG. 3.

The server computing system (110) further includes a training engine (114), as shown in FIG. 1. The training engine (114) is operably and communicably coupled to the data repository (120), the field ML model (116), and the teaching LLM (112). The training engine (114) is a set of programs and computer readable code, including functionality to orchestrate the components of the server computing system (110). More particularly, the training engine (114) includes functionality to orchestrate the teaching LLM (112), and the training application (109) of the developer computing system (108), to generate synthetic data and train and deploy the field ML model (116).

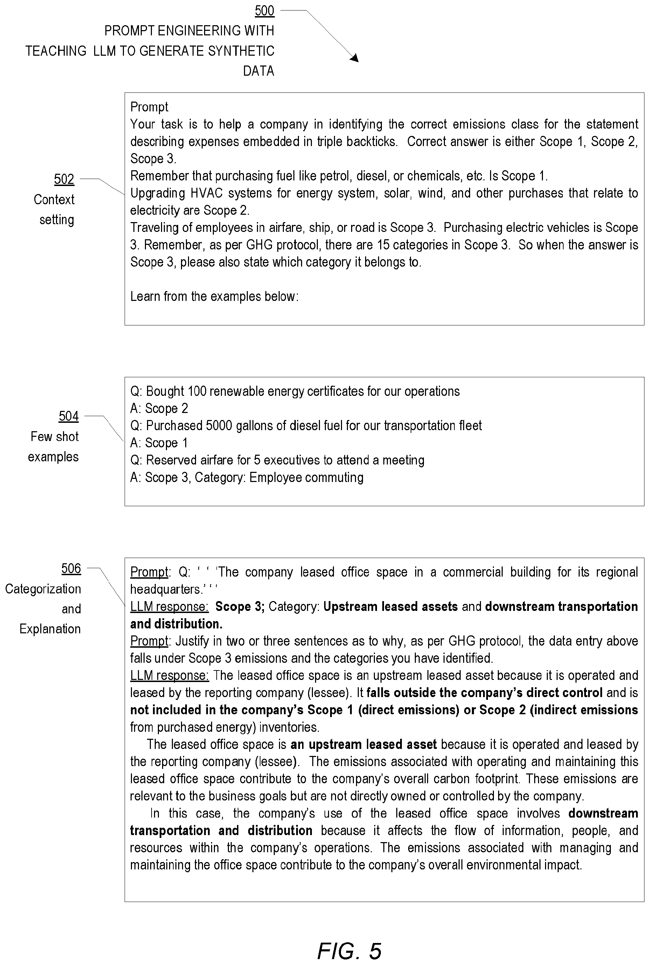

The server computing system further includes a field ML model (116). The field ML model (116) is operably and communicably coupled to the training engine (114). The field ML model (116) is a machine learning model that is trained through supervised learning. When trained and deployed, the field ML model (116) takes enterprise data generated by one or more enterprise or user applications as input and processes the input to generate a classification of the input. The classification of the input is a label from a set of pre-defined emission classes, in accordance with the GHG Protocol. The current GHG Protocol defines three emission scopes and fifteen categories corresponding to emission Scope 3. Therefore, the number of pre-defined emission classes is the three emission scopes and fifteen categories. For example, the label may be "Scope 1", "Scope 2", or "Scope 3". In the case of enterprise data input being classified by the label "Scope 3", the field ML model (116) provides an additional label in accordance with categories defined by the GHG Protocol for Scope 3 emissions. In one or more embodiments, the field ML model is a transformer model. Examples of transformer models include Bi-directional Encoder Representations from Transformers (BERT), Generative Pre-trained Transformer (GPT), XLNet, Efficiently Learning an Encoder that Classifies Token Replacements Accurately (Electra), *etc.* The use of the deployed field ML model (116) is further described in reference to the example shown in FIG. 5.

As shown in FIG. 1, the server computing system (110) includes a data repository (120). The data repository (120) is a type of storage unit or device (*e.g.*, a file system, database, data structure, or any other storage mechanism) for storing data. The data repository (120) may include multiple different, potentially heterogeneous, storage units and/or physical storage devices. An example of a physical storage device that may be part of the server computing system (110) is the persistent storage device(s) (606) described in reference to FIG 6A.

The data repository includes a domain knowledge base (122). The domain knowledge base (122) may include one or more reference documents pertaining to specific knowledge domains of an enterprise. For example, the domain knowledge base may include reference documents pertaining to the GHG Protocol scope classifications for emissions data of the enterprise. When LLMs use additional reference documents provided along with a prompt to generate an answer, the answer generation process is referred to as retrieval augmented generation (RAG). Retrieval augmented generation may provide for generating up-to-date and accurate responses. Such systems are known to have "RAG" retrieval augmented generation architecture.

The data repository (120) includes one or more example instances (124). Example instances are input data instances provided to the teaching LLM (112) in a prompting session instructing the teaching LLM (112) to generate synthetic data. An example instance may be a line item from expense report data. For example, the line item may include a cost field and corresponding value, indicating the amount of the expense, (*e.g.*, 100,000), a currency field and corresponding value (*e.g.*, USD) a location or site field and corresponding location (*e.g.*, oilfield 21, Alaska), indicating the site at which the expense was incurred, a description field and corresponding descriptive text of the expense, (*e.g.*, "purchased 5000 gallons of fuel at the drilling site premises"). Other forms of example instances may be included. Notably, example instances include a descriptive field providing a natural language description of an enterprise event, such as an expense incurrence, an incident report such as a site alarm or accident, *etc..* The synthetic data is generated by the teaching LLM (112) based on the example instances (124). The use of the example instances (124) are further described in reference to flowchart 300 shown in FIG. 3.

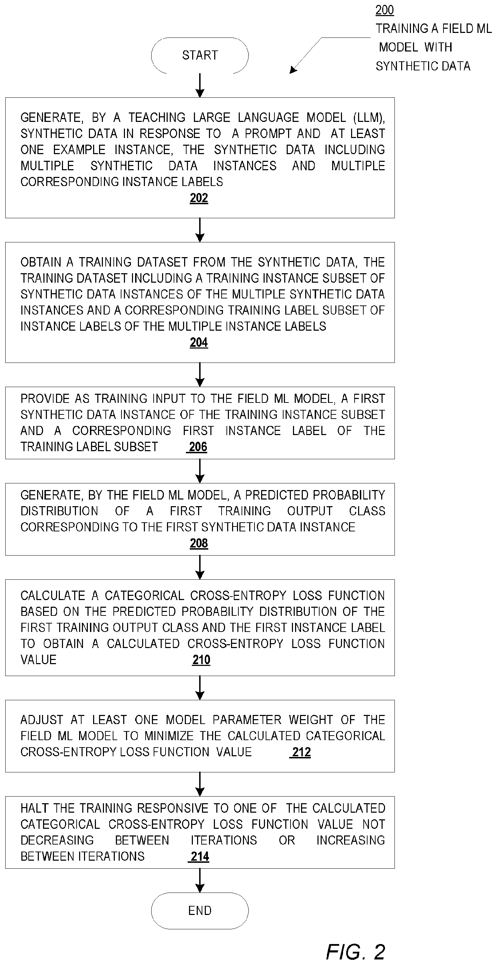

The data repository (120) includes at least one training dataset (126). The training dataset (126) is a dataset used by the training engine (114) to train the field ML model (116) in accordance with the flowchart 200 shown in FIG. 2. The training dataset (126) includes multiple training instances (127). A training instance (127) further includes a synthetic data instance (128) and a corresponding instance label (129). The corresponding instance label (129) is a label, as described above, of the synthetic data instance (128). The synthetic data instance (128) and corresponding instance label (129) are a data instance and a label that are generated by the teaching LLM (112). As such, the synthetic data instance (128) and corresponding instance label (129) are synthetic. The synthetic data instance (128) is similar in structure and form to an example instance (124). Generation of the synthetic data instance (128) and corresponding instance label (129) is described in further detail in reference to flowchart 300 shown in FIG. 3.

The data repository (120) further includes at least one testing dataset (130). The testing dataset (130) is used by the training engine (114) to evaluate the field ML model (116). The testing dataset (130) includes multiple testing instances (127). The testing dataset (130) is shown as including two types of testing instances, namely testing instance 1 (132) and testing instance 2 (135). The testing instance 1 (132) includes a test data instance (133) which is a synthetic data instance generated by the teaching LLM (112). The testing instance 1 (132) further includes a test instance label (134) generated by the teaching LLM (112). The test instance label (134) corresponds to the test data instance (133). The test instance label may be used in evaluating the output of the field ML model (116), and subsequently modifying one or more parameters of the field ML model (116) based on the evaluation. Use of the test instance label (134) to evaluate the field ML model (116) output is further described in reference to FIG. 2. The testing instance 2 (135) differs from the testing instance 1 ( 132) in that the data instance of testing instance 2 (135) is obtained from real data (*e.g.*, real data instance (136) in FIG. 1). Real data refers to previously generated enterprise data pertaining to a real event, for example, the purchase of multiple electric vehicles, or the purchase of fuel for operating a processing facility. The generation of the real data instance (136) from real data is further described in reference to FIG. 3.

While FIG. 1 shows a configuration of components, other configurations may be used without departing from the scope of one or more embodiments. For example, various components may be combined to create a single component. As another example, the functionality performed by a single component may be performed by two or more components.

FIG. 2 shows a flowchart 200 of a method for training a field ML model with synthetic data, in accordance with one or more embodiments. The method of FIG. 2 may be implemented using the components and computing systems shown in the system of FIG. 1 and one or more of the steps may be performed on or received at one or more computer processors.

While the various steps in the flowchart 200 are presented and described sequentially, at least some of the steps may be executed in different orders, may be combined, or omitted, and at least some of the steps may be executed in parallel. Furthermore, the steps may be performed actively or passively.

The flowchart 200 starts at Block 202. A teaching large language model (LLM) generates synthetic data in response to a prompt and at least one example instance, the synthetic data including multiple synthetic data instances and multiple corresponding instance labels. In one or more embodiments, the training engine may orchestrate interactions between the teaching LLM and the training application executing on the developer computing system, to generate synthetic data. The input to the teaching LLM may be provided in a prompting session. One or more example instances may be included in the input. Additionally the prompt may include instructions to generate synthetic data instances and corresponding instance labels, in a particular distribution across a set of pre-defined emission classes. In one embodiment, the prompting session may be initiated by a domain expert interacting with the developer application executing on the developer computing system. Furthermore, in the prompting session, the domain expert may monitor samples of synthetic data generated by the teaching LLM and may further instruct the teaching LLM to provide a natural language explanation of the reasoning logic used by the teaching LLM to assign a particular label to a particular synthetic data instance. A detailed description of prompting the teaching LLM to generate synthetic data is provided in reference to FIG. 3.

At Block 204, a training dataset is obtained from the synthetic data, the training dataset, including a training instance subset of synthetic data instances of the multiple synthetic data instances and a corresponding training label subset of instance labels of the multiple instance labels obtained in Block 202. In one or more embodiments, the training engine may obtain the training dataset from the data repository. The training dataset in the data repository may be previously created from the synthetic data obtained from Block 202. Additionally or alternatively, the training dataset may be created by the training engine from the synthetic data obtained from Block 202.

At Block 206, a first synthetic data instance of the training instance subset and a corresponding first instance label of the training label subset are provided as training input to the field ML model.

In one or more embodiments, the field ML model is a natural language processing transformer model. A general overview of transformer models is described herein.

Transformer models are based on a type of neural network architecture. A transformer model includes at least an encoder component and a decoder component. The encoder transforms the tokens of a tokenized input data instance into contextualized representations. That is, the encoder captures the context of each token of the input data instance with respect to the remaining tokens of the input data instance. In one or more embodiments, the tokens of an input data instance in natural language may be word representations. The decoder generates an output based on the output from the encoder and a previous output from the decoder. The encoder and decoder components, or layers, may each include one or more layers of attention and feed-forward neural networks.

An attention neural network layer in a natural language processing transformer model calculates weights that represent the importance or relevance of other tokens, for example, previous or past tokens, in a sequence with respect to a particular given or current token. The attention layer has capabilities to operate on a complete data instance at a given time, using parallel computation operations. The calculated weights are known as attention weights and represent the importance, or weightage, of a token in making an output prediction. Thus, the attention layer in an encoder captures the context of each token of the input data instance.

A feed-forward neural network (FFNN) includes an input layer, one or more hidden layers, and an output layer. The input layer includes nodes, or neurons, generally equal in number to features of the input data instance. The output layer includes nodes, generally equal in number to the number of output classes. The hidden layers include nodes, or neurons that multiply the inputs with weights. The weights function as a mechanism to focus on or ignore certain inputs. The weighted inputs are summed together. The summed value is transformed into an output value according to the node's activation function. Some examples of activation functions include sigmoid functions, rectified linear unit (ReLU) functions, tanh functions, *etc.* The node's output value is an input for a next node in a next layer of the FFNN. Notably, an input sequence to the FFNN flows in only a forward direction from input to output. Namely, the output from each layer of the FFNN is propagated forward to the next layer.

Thus, the attention layers of the encoder and decoder components of the transformer model focus on relevant parts of an input data instance and capture the interdependencies of the words of the input data instance. Further, the feed-forward neural network layers of the encoder and decoder components of the transformer model process the outputs of the attention layers by applying one or more transformations to the outputs.

Transformer models further include an additional output layer following the decoder component. That is, the output layer takes as input, the output of the decoder component. The output layer includes a linear layer and a softmax function. The linear layer functions as a classifier. In the linear layer, the decoder output is mapped to the pre-defined classes. More particularly, the linear layer projects the decoder output to a space where each dimension of the space corresponds to a pre-defined class. The output of the linear layer is a set of raw scores corresponding to each pre-defined class with respect to the decoder output. In other words, the raw scores represent the likelihood of the decoder output belonging to a particular class. The set of raw scores are represented as a vector of real values. Further, the softmax function is applied to the output of the linear layer to generate a range of probability scores corresponding to each class of the output of the linear layer. The softmax function is a mathematical operation that transforms a first vector of K real values into a second vector of K real values, the sum of the K real values of the second vector summing up to 1. The softmax function ensures that the second vector values are in the range of {0 to 1}. The second vector values are interpreted as probabilities. The second vector, therefore, represents a predicted probability distribution of the predicted class of the input data instance processed by the transformer model. The class with the highest probability score is the predicted class of the input data sequence.

Accordingly, at Block 208, the field ML model generates a predicted probability distribution of a first training output class corresponding to the first synthetic data instance.

At Block 210, a categorical cross-entropy loss function is calculated, based on the predicted probability distribution of the first training output class and the first instance label (the "true" label). In one or more embodiments, the categorical cross-entropy loss function is calculated in accordance with Equation 1:

$$ L = -\sum (y * log(p)) \qquad\qquad (1) $$

Wherein:

$L$ represents the categorical cross-entropy loss;

$\sum$ denotes the summation over the training samples;

$y$ represents the ground truth label, namely, the first instance label; and

$p$ represents the predicted probability distribution of the first training output class.

In equation 1, the logarithm of the predicted probabilities is multiplied elementwise with the ground truth labels. The negative sign ensures that the loss is minimized during the training process. The aim is to minimize the discrepancy between the predicted probabilities and the ground truth labels for each sample in the training dataset. Further, the first instance label may be represented by a one-hot encoded vector sized according to the total number of classes of the pre-defined emission classes.

At Block 212, at least one model parameter weight of the field ML model is adjusted to minimize the calculated categorical cross-entropy loss function value. In one or more embodiments, the model parameter weight is adjusted based on an optimization function. An optimization function is a machine learning optimization algorithm which may be implemented as a computer program function. In one embodiment, the optimization function is a gradient descent function. Optimization of a machine learning model with the gradient descent function entails the technique of backpropagation. The gradient descent function adjusts the weights and biases of the machine learning model based on the calculated categorical cross-entropy loss function value, by following the negative gradient of the loss function with respect to the model parameters. The goal is to minimize the categorical cross-entropy loss function value.

In the gradient descent function, the backpropagation technique is used for calculating gradients. When a machine learning model with an underlying neural network predicts an output class, the neural network computes intermediate values, or transformation function values, for each layer. During backpropagation, the gradients of the loss function with respect to the intermediate values are calculated. Specifically, for each layer, the chain rule of differential calculus is applied to calculate the gradient of the loss function with respect to the input of the layer. The calculated gradients are used by the gradient descent function to update the model parameters. In one or more embodiments, other convex optimization (or objective) functions may be used, for example, Adaptive Moment Estimator (Adam) function, and Adam variants, *etc.* As a general overview, convex optimization functions are mathematical functions satisfying certain properties related to convexity. A convex optimization problem involves minimizing a convex objective function over a convex feasible set. Examples of applications using convex optimizations include linear programming, quadratic programming, and support vector machines.

Blocks 206-212 of the flowchart 200 constitute an iteration of training the field ML model. In one or more embodiments, Blocks 206-212 of the flowchart 200 are iterated over the multiple training instances of the training dataset. The categorical cross-entropy loss function is calculated in successive iterations and the model parameters are correspondingly adjusted in the successive iterations in a manner to minimize the categorical cross-entropy loss function.

When training a transformer model using cross-entropy loss, the endpoint of the training process may depend on factors such as convergence, performance, and available resources. In one embodiment, the endpoint is reached based on the early stopping method, stopping the training when the performance between two consecutive iterations is stable. Consequently, the change in value of the categorical cross-entropy loss function ("loss function") is monitored to determine when to stop the training process. If the loss function value change stops decreasing, it can be inferred that the performance of the model has stabilized between successive iterations. If the loss function value change increases between successive iterations, that indicates that the model is at risk of overfitting. Overfitting refers to an unwanted behavior of a machine learning algorithm used for predictive modeling. Overfitting occurs when the model fits the training data too closely, capturing noise and idiosyncrasies specific to that dataset. As a result, the model becomes less effective at making accurate predictions on new, unseen data.

Accordingly, at Block 214, the training of the field ML model is halted, responsive to one of (i) the calculated categorical cross-entropy loss function value not decreasing iterations of training the field ML model, or (ii) increasing with successive iterations of training the field ML model. The flowchart 200 ends at Block 214.

During training, the field ML model learns from the training dataset, adjusting its parameters to minimize the training error. However, if the field ML model becomes too complex (*e.g.*, too many features), it can capture noise and idiosyncrasies of the training dataset. When evaluated on a separate test dataset (not seen during training), the field ML model may exhibit a performance degradation, failing to generalize beyond the training data.

Accordingly, in one or more embodiments, the field ML model is evaluated in a testing phase. The testing phase entails obtaining a testing dataset from the synthetic data obtained in Block 202. The testing dataset includes a test instance subset of the multiple synthetic data instances and a corresponding test label subset of the multiple instance labels. As described herein, the synthetic data instances of the testing subset are referred to as test instances, and the instance labels of the test label subset are referred to as test instance labels. In one or more embodiments, the training engine may obtain the testing dataset from the data repository. The testing dataset in the data repository may be previously created from synthetic data previously obtained from the teaching LLM. In additional embodiments, the testing dataset may include testing instances composed of real data instances. That is, the data instance originates from enterprise data collected from the working of an enterprise, for example, expense reports, inventory, *etc.* Additionally or alternatively, the testing dataset may be created by the training engine from the synthetic data obtained from Block 202. Notably, the testing dataset is an unseen dataset from the context of the field ML model. In other words, the field ML model has had no previous access, or exposure, to the testing dataset.

Subsequently, the training engine may provide, as test input to the field ML model, a first test instance of the test instance subset and obtain a first test output class corresponding to the first test instance from the field ML model. Further, the training engine may compare the first test output class and a first test label from the test label subset corresponding to the first test instance to obtain a model validation score. The model validation score may be monitored over successive testing iterations, testing with the multiple test instances of the testing subset. More particularly the model validation score may be verified to be lower than a model error threshold. Finally, the field ML model may be deployed in the server computing system, responsive to the model validation score value being verified as lower than the model error threshold, over successive testing iterations.

In one or more embodiments, a confusion matrix may be constructed representing the accurate and incorrect predictions of the field ML model with respect to the testing dataset. The confusion matrix includes rows and columns corresponding to the total number of output classes of the field ML model. The diagonal elements, or cells, of the matrix represent the accurate predictions, and the off-diagonal elements, or cells, represent errors made by the field ML model.

Metrics such as accuracy, precision, recall, F1-score, *etc.,* may be calculated based on the confusion matrix.

Attention is now turned to FIG. 3. FIG. 3 shows a flowchart 300 of a method to prompt the teaching LLM to generate synthetic data. The method of FIG. 3 may be implemented using the components and computing systems shown in the system of FIG. 1 and one or more of the steps may be performed on or received at one or more computer processors.

While the various steps in flowchart 300 are presented and described sequentially, at least some of the steps may be executed in different orders, may be combined, or omitted, and at least some of the steps may be executed in parallel. Furthermore, the steps may be performed actively or passively.

A prompting session for the generation of synthetic data may entail prompt engineering using a chain-of-thoughts technique, along with few-shot learning techniques. Few-shot learning techniques in the context of LLMs refer to providing the LLM with a small number of examples specific to the prompt. The small number of examples are provided in a few-shot example set and may be referred to as few-shot examples. The number of examples provided is dependent on the context window of the LLM, which refers to the amount of information that the LLM considers at a time. Chain-of-thoughts (CoT) refers to a prompt engineering technique in which LLMs are guided, via prompts, in complex reasoning tasks. A thought is a response generated by the LLM to a prompt.

The CoT technique begins with a broad prompt, providing initial context, or guidance, to the LLM. Additionally or alternatively, one or more reference documents may be provided to the LLM in a retrieval-augmented-generation approach. The CoT technique progressively refines instructions, while adapting to the models' thoughts (responses). The iterative process ensures that the LLM maintains context, learns from previous interactions, and produces successively more accurate and coherent responses. Additionally, the CoT technique encourages the LLM to break down complex thoughts (responses) into intermediate steps, representing reasoning actions. Further, the CoT technique entails providing demonstrations or examples for the LLM to reason more effectively.

Referring now to Block 302 of the flowchart 300, input parameters to a teaching LLM are provided. The input parameters include a prompt and at least one example instance. The prompt includes a context explaining the domain of the synthetic data and an instruction to generate at least one synthetic data instance based on the context and the example instance. The example instance includes a natural language description of an event and a classification label corresponding to the event.

In Block 304, a new synthetic data instance and a corresponding first new instance label are generated by the teaching LLM, in response to the prompt, and the at least one example instance.

In Block 306, the new synthetic data instance, and the corresponding first new instance label are provided as input parameters to the teaching LLM, along with an instruction to generate a natural language explanation of the first new instance label with respect to the new synthetic data instance. In other words, the teaching LLM is prompted to explain the rationale behind the assignation of the particular new instance label to the new synthetic data instance generated by the teaching LLM.

In Block 308, the natural language explanation of the first new instance label is provided as an input parameter to the teaching LLM, along with a (succeeding) instruction to generate a second new instance label corresponding to the new synthetic data instance, based on the natural language explanation of the first new instance label. By providing the natural language explanation generated by the teaching LLM in Block 306, the prompting session is adding the preceding thought (response) by the teaching LLM to the context of the succeeding instruction. In other words, the context set in Block 308 now includes a "chain" of thoughts (responses) that the teaching LLM takes into consideration.

In Block 310, the second new instance label corresponding to the new synthetic data instance generated by the teaching LLM in Block 308 is obtained by the training engine, and the new synthetic data instance, and the corresponding second new label instance are added to the synthetic data.

In one or more embodiments, the steps of Blocks 302-308 are iterated for several iterations, each iteration using at least one example instance and a prompt. Requesting an explanation for the classification of the new synthetic data instance and prompting the teaching LLM to generate a second new instance label for the synthetic data instance based on the LLMs previous natural language explanation of the first new instance label, prompts the LLM to a chain-of-thought mode of generating each succeeding response based on a preceding response.

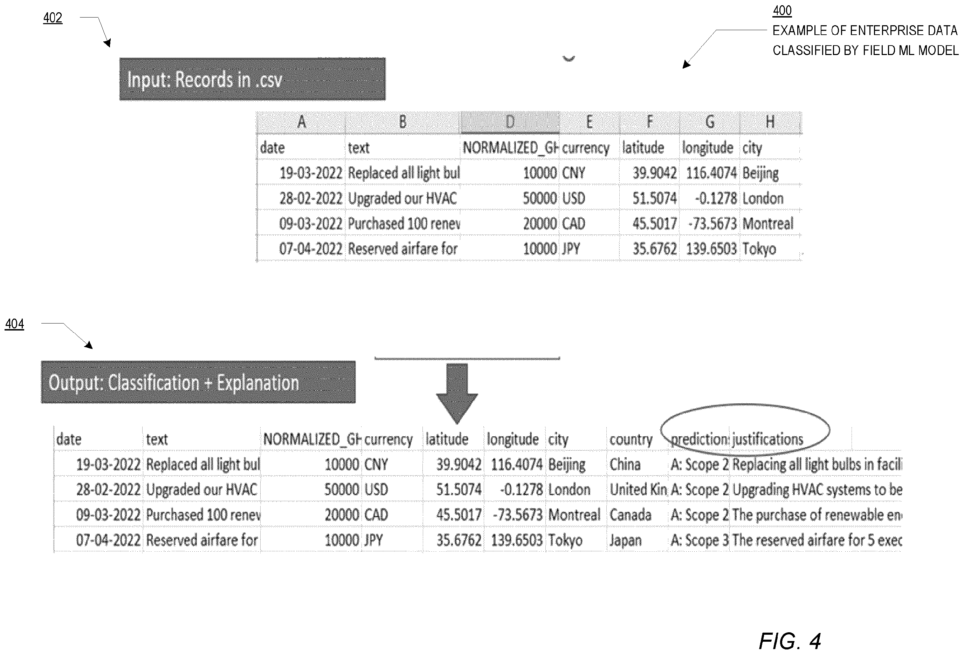

FIG. 4 shows an example of enterprise data provided to the field ML model when deployed in an enterprise environment, and the output generated by the field ML model, in accordance with one or more embodiments. The following example is for explanatory purposes only and not intended to limit the scope of one or more embodiments.

Reference numeral 402 is indicative of a table, shown as "Input: records in .csv". The table has columns for date, (descriptive) text, normalized cost, currency, latitude, longitude, and city. The table indicated by reference numeral 402 is representative of a set of line items detailing expenditure by an enterprise by location and description of the enterprise. Thousands of such line items may exist in an enterprise, and manually classifying each line item into a predefined emission class, is not feasible. Thus, the table indicated by reference numeral 402 may be provided as input to the field ML model.

Reference numeral 404 is indicative of a table, shown as "Output: Classification + Explanation". The table indicated by reference numeral 404 is similar to the table indicated by reference numeral 402, with the addition of two columns, namely "prediction" and "justification". The prediction column shows the assignation of a pre-defined emission class to the corresponding descriptive text of the expense line item. The justification column shows the natural language explanation of the pre-defined emission class with respect to the corresponding descriptive text of the expense line item.

FIG. 5 shows an example of prompt engineering in a prompting session between a domain expert and the teaching LLM to generate synthetic data, in accordance with one or more embodiments. The following example is for explanatory purposes only and not intended to limit the scope of one or more embodiments.

Reference numeral 502 indicates an initial prompt to the teaching LLM. The prompt explains the format of the example and indicates that the teaching LLM should identify the correct emission class for the statement describing the expense. As shown in the example, the context defined for each emission class is a brief overview of the emission class definition. In one or more implementations, the GHG Protocol document may be provided as a reference document in accordance with the retrieval augmented generation feature of the teaching LLM.

Reference numeral 504 indicates a few-shot example set provided to the teaching LLM in the prompting session. The few-shot example set is a balanced example set, providing examples for the three main emission classes. Additionally, a category for the Scope 3 emission classification is also provided. In alternate implementations, a set of seventeen examples, each example corresponding to respective pre-defined emission classes (Scope 1, Scope 2, Scope 3, category 1, Scope 3, category 2 ..., Scope 3, category 15) may be provided.

Reference numeral 506 indicates a section of the prompting session in which a trial instance that is provided by the domain expert to the teaching LLM. The prompt includes a descriptive statement of an expense item. The teaching LLM returns a response, namely, emission class Scope 3, and the specific category of the Scope 3 emission class. In this case, the teaching LLM identifies two categories, namely "Upstream leased assets" and "Downstream transportation and distribution." The teaching LLM generates the response based on the context provided in the previous sections of the prompting session indicated by reference numerals 502 and 504.

The prompting session further continues with an instruction from the domain expert to provide an explanation (justification) of the assignment of emission class Scope 3, and the specific categories generated by the teaching LLM in the preceding response. The teaching LLM provides an explanation of the reason that the trial instance does not fall into the Scope 1 or Scope 2 emission classes, and an explanation of the two categories that it deems applicable to the trial instance.

Thus, the trained field ML model is specialized to leverage the distilled knowledge from the teaching LLM for accurate classification of enterprise data into different pre-defined emissions classes.

One or more embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure.

For example, as shown in FIG. 6A, the computing system (600) may include one or more computer processor(s) (602), non-persistent storage device(s) (604), persistent storage device(s) (606), a communication interface (608) (*e.g.*, Bluetooth interface, infrared interface, network interface, optical interface, *etc.*), and numerous other elements and functionalities that implement the features and elements of the disclosure. The computer processor(s) (602) may be an integrated circuit for processing instructions. The computer processor(s) (602) may be one or more cores, or micro-cores, of a processor. The computer processor(s) (602) includes one or more processors. The computer processor(s) (602) may include a central processing unit (CPU), a graphics processing unit (GPU), a tensor processing unit (TPU), combinations thereof, *etc.*

The input device(s) (610) may include a touchscreen, keyboard, mouse, microphone, touchpad, electronic pen, or any other type of input device. The input device(s) (610) may receive inputs from a user that are responsive to data and messages presented by the output device(s) (612). The inputs may include text input, audio input, video input, *etc.*, which may be processed and transmitted by the computing system (600) in accordance with one or more embodiments. The communication interface (608) may include an integrated circuit for connecting the computing system (600) to a network (not shown) (*e.g.*, a local area network (LAN), a wide area network (WAN) such as the Internet, mobile network, or any other type of network) or to another device, such as another computing device, and combinations thereof.

Further, the output device(s) (612) may include a display device, a printer, external storage, or any other output device. One or more of the output device(s) (612) may be the same or different from the input device(s) (610). The input device(s) (610) and output device(s) (612) may be locally or remotely connected to the computer processor(s) (602). Many diverse types of computing systems exist, and the aforementioned input device(s) (610) and output device(s) (612) may take other forms. The output device(s) (612) may display data and messages that are transmitted and received by the computing system (600). The data and messages may include text, audio, video, *etc.*, and include the data and messages described above in the other figures of the disclosure.

Software instructions in the form of computer readable program code to perform embodiments may be stored, in whole or in part, temporarily or permanently, on a non-transitory computer readable medium such as a solid state drive (SSD), compact disk (CD), digital video disk (DVD), storage device, a diskette, a tape, flash memory, physical memory, or any other computer readable storage medium. Specifically, the software instructions may correspond to computer readable program code that, when executed by the computer processor(s) (602), is configured to perform one or more embodiments, which may include transmitting, receiving, presenting, and displaying data and messages described in the other figures of the disclosure.

The computing system (600) in FIG. 6A may be connected to, or be a part of, a network. For example, as shown in FIG. 6B, the network (620) may include multiple nodes (*e.g.*, node X (622) and node Y (624), as well as extant intervening nodes between node X (622) and node Y (624)). Each node may correspond to a computing system, such as the computing system shown in FIG. 6A, or a group of nodes combined may correspond to the computing system shown in FIG. 6A. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (600) may be located at a remote location and connected to the other elements over a network.

The nodes (*e.g.*, node X (622) and node Y (624)) in the network (620) may be configured to provide services for a client device (626). The services may include receiving requests and transmitting responses to the client device (626). For example, the nodes may be part of a cloud computing system. The client device (626) may be a computing system, such as the computing system shown in FIG. 6A. Further, the client device (626) may include or perform all or a portion of one or more embodiments.

The computing system of FIG. 6A may include functionality to present data (including raw data, processed data, and combinations thereof) such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown, as well as how data is presented to a user. Furthermore, the GUI may present data directly to the user, *e.g.*, data presented as actual data values through text, or rendered by the computing device into a visual representation of the data, such as through visualizing a data model.

As used herein, the term "connected to" contemplates multiple meanings. A connection may be direct or indirect (*e.g.*, through another component or network). A connection may be wired or wireless. A connection may be a temporary, permanent, or a semi-permanent communication channel between two entities.

The various descriptions of the figures may be combined and may include, or be included within, the features described in the other figures of the application. The various elements, systems, components, and steps shown in the figures may be omitted, repeated, combined, or altered as shown in the figures. Accordingly, the scope of the present disclosure should not be considered limited to the specific arrangements shown in the figures.

In the application, ordinal numbers (*e.g.*, first, second, third, *etc.*) may be used as an adjective for an element (*i.e.*, any noun in the application). The use of ordinal numbers is not to imply or create any particular ordering of the elements, nor to limit any element to being only a single element unless expressly disclosed, such as by the use of the terms "before," "after," "single," and other such terminology. Rather, ordinal numbers distinguish between the elements. By way of an example, a first element is distinct from a second element, and the first element may encompass more than one element and succeed (or precede) the second element in an ordering of elements.

Further, unless expressly stated otherwise, the conjunction "or" is an inclusive "or" and, as such, automatically includes the conjunction "and," unless expressly stated otherwise. Further, items joined by the conjunction "or" may include any combination of the items with any number of each item, unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above can be devised which do not depart from the scope of the claims as disclosed herein. Accordingly, the scope should be limited only by the attached claims.

**Claims**

1. A computer-implemented method, comprising:

   generating, by a teaching large language model (LLM), synthetic data comprising a plurality of synthetic data instances and a corresponding plurality of instance labels;

obtaining, by a training engine, a training dataset from the synthetic data, the training dataset comprising a training instance subset of the plurality of synthetic data instances and a corresponding training label subset of the corresponding plurality of instance labels; and

training a field machine learning (ML) model by performing operations comprising:

providing as training input, by the training engine to the field ML model, a first synthetic data instance of the training instance subset and a corresponding first instance label of the corresponding training label subset,

generating, by the field ML model, a predicted probability distribution of a first training output class corresponding to the first synthetic data instance,

calculating a categorical cross-entropy loss function based on the predicted probability distribution of the first training output class and the corresponding first instance label to obtain a calculated categorical cross-entropy loss function value; and

adjusting at least one model parameter weight of the field ML model to minimize the calculated categorical cross-entropy loss function value.

2. The method of claim 1, further comprising:
halting training of the field ML model, responsive to the calculated categorical cross-entropy loss function value not decreasing with successive iterations of training the field ML model.

3. The method of claim 1 or 2, further comprising:
halting training of the field ML model, responsive to the calculated categorical cross-entropy loss function value increasing with successive iterations of training the field ML model.

4. The method of any one of the preceding claims, further comprising:

obtaining, by the training engine, a testing dataset from the synthetic data comprising a test instance subset of the plurality of synthetic data instances and a corresponding test label subset of the corresponding plurality of instance labels;

providing, as test input, by the training engine to the field ML model, a first test instance of the test instance subset; and

obtaining, from the field ML model, a first test output class corresponding to the first test instance.

5. The method of claim 4, further comprising:

comparing, by the training engine, the first test output class and a first test label from the corresponding test label subset corresponding to the first test instance to obtain a model validation score; and

deploying the field ML model, responsive to the model validation score being lower than a model error threshold.

6. The method of any one of the preceding claims, further comprising:
adjusting the at least one model parameter weight of the field ML model to minimize the calculated categorical cross-entropy loss function value, wherein the at least one model parameter weight is adjusted based on an optimization function, and wherein the optimization function comprises a gradient descent function.

7. The method of any one of the preceding claims, further comprising:

providing, as input parameters to the teaching LLM, a prompt and at least one example instance, wherein:

the prompt comprises a context of the synthetic data, and an instruction to generate at least one synthetic data instance based on the context, and the at least one example instance, and

the at least one example instance comprises a natural language description of an event and a classification label corresponding to the event; and

generating, by the teaching LLM, a new synthetic data instance and a corresponding first new instance label in response to the instruction and context, using the natural language description and the classification label.

8. The method of claim 7, further comprising:

providing, as input parameters to the teaching LLM, the new synthetic data instance, and the corresponding first new instance label, along with an instruction to generate a natural language explanation of the corresponding first new instance label with respect to the new synthetic data instance; and

providing, as input parameters to the teaching LLM, the natural language explanation of the corresponding first new instance label, along with an instruction to generate a second new instance label corresponding to the new synthetic data instance based on the natural language explanation of the corresponding first new instance label.

9. The method of claim 8, further comprising:

obtaining, by the training engine, the second new instance label corresponding to the new synthetic data instance generated by the teaching LLM; and

adding the new synthetic data instance and the corresponding second new label instance to the synthetic data.

10. The method according to any one of the preceding claims, comprising:
iteratively training a field machine learning (ML) model by performing operations comprising:

providing as training input, by the training engine to the field ML model, a first synthetic data instance of the training instance subset and a corresponding first instance label of the corresponding training label subset,

generating, by the field ML model, a predicted probability distribution of a first training output class corresponding to the first synthetic data instance,

calculating a categorical cross-entropy loss function based on the predicted probability distribution of the first training output class and the corresponding first instance label to obtain a calculated categorical cross-entropy loss function value,

adjusting at least one model parameter weight of the field ML model to minimize the calculated categorical cross-entropy loss function value, wherein the at least one model parameter weight is adjusted based on an optimization function, and wherein the optimization function comprises a gradient descent function, and

halting the iterative training of the field ML model, responsive to one of:

the calculated categorical cross-entropy loss function value not decreasing with successive iterations of training the field ML model, and

the calculated categorical cross-entropy loss function value increasing with successive iterations of training the field ML model.

11. The method of claim 10, further comprising:

providing, as input parameters to the teaching LLM, a prompt and at least one example instance, wherein:

the prompt comprises a context of the synthetic data, and an instruction to generate at least one synthetic data instance based on the context, and the at least one example instance, and

the at least one example instance comprises a natural language description of an event and a classification label corresponding to the event;

generating, by the teaching LLM, a new synthetic data instance and a corresponding first new instance label in response to the instruction and context, using the natural language description and the classification label;

providing, as input parameters to the teaching LLM, the new synthetic data instance, and the corresponding first new instance label, along with an instruction to generate a natural language explanation of the corresponding first new instance label with respect to the new synthetic data instance;

providing, as input parameters to the teaching LLM, the natural language explanation of the corresponding first new instance label, along with an instruction to generate a second new instance label corresponding to the new synthetic data instance based on the natural language explanation of the first new instance label;

obtaining, by the training engine, the second new instance label corresponding to the new synthetic data instance generated by the teaching LLM; and

adding the new synthetic data instance and the corresponding second new label instance to the synthetic data.

12. A system, comprising:

at least one computer processor; and

a training engine, executing on the at least one computer processor, that is configured to perform the method according to any one of the preceding claims.

FIG. 1

200
TRAINING A FIELD ML
MODEL WITH
SYNTHETIC DATA

START

GENERATE, BY A TEACHING LARGE LANGUAGE MODEL (LLM), SYNTHETIC DATA IN RESPONSE TO A PROMPT AND AT LEAST ONE EXAMPLE INSTANCE, THE SYNTHETIC DATA INCLUDING MULTIPLE SYNTHETIC DATA INSTANCES AND MULTIPLE CORRESPONDING INSTANCE LABELS
**202**

OBTAIN A TRAINING DATASET FROM THE SYNTHETIC DATA, THE TRAINING DATASET INCLUDING A TRAINING INSTANCE SUBSET OF SYNTHETIC DATA INSTANCES OF THE MULTIPLE SYNTHETIC DATA INSTANCES AND A CORRESPONDING TRAINING LABEL SUBSET OF INSTANCE LABELS OF THE MULTIPLE INSTANCE LABELS
**204**

PROVIDE AS TRAINING INPUT TO THE FIELD ML MODEL, A FIRST SYNTHETIC DATA INSTANCE OF THE TRAINING INSTANCE SUBSET AND A CORRESPONDING FIRST INSTANCE LABEL OF THE TRAINING LABEL SUBSET **206**

GENERATE, BY THE FIELD ML MODEL, A PREDICTED PROBABILITY DISTRIBUTION OF A FIRST TRAINING OUTPUT CLASS CORRESPONDING TO THE FIRST SYNTHETIC DATA INSTANCE
**208**

CALCULATE A CATEGORICAL CROSS-ENTROPY LOSS FUNCTION BASED ON THE PREDICTED PROBABILITY DISTRIBUTION OF THE FIRST TRAINING OUTPUT CLASS AND THE FIRST INSTANCE LABEL TO OBTAIN A CALCULATED CROSS-ENTROPY LOSS FUNCTION VALUE **210**

ADJUST AT LEAST ONE MODEL PARAMETER WEIGHT OF THE FIELD ML MODEL TO MINIMIZE THE CALCULATED CATEGORICAL CROSS-ENTROPY LOSS FUNCTION VALUE **212**

HALT THE TRAINING RESPONSIVE TO ONE OF THE CALCULATED CATEGORICAL CROSS-ENTROPY LOSS FUNCTION VALUE NOT DECREASING BETWEEN ITERATIONS OR INCREASING BETWEEN ITERATIONS **214**

END

*FIG. 2*

300
PROMPTING A LARGE LANGUAGE MODEL TO GENERATE SYNTHETIC DATA

**START**

PROVIDE, AS INPUT PARAMETERS TO A TEACHING LLM, A PROMPT AND AT LEAST ONE EXAMPLE INSTANCE. THE PROMPT INCLUDES A CONTEXT EXPLAINING THE DOMAIN OF THE SYNTHETIC DATA, AND AN INSTRUCTION TO GENERATE AT LEAST ONE SYNTHETIC DATA INSTANCE BASED ON THE CONTEXT AND THE AT LEAST ONE EXAMPLE INSTANCE, AND THE AT LEAST ONE EXAMPLE INSTANCE INCLUDES A NATURAL LANGUAGE DESCRIPTION OF AN EVENT AND A CLASSIFICATION LABEL CORRESPONDING TO THE EVENT **302**

GENERATE, BY THE TEACHING LLM, A NEW SYNTHETIC DATA INSTANCE AND A CORRESPONDING FIRST NEW INSTANCE LABEL IN RESPONSE TO THE PROMPT AND THE AT LEAST ONE EXAMPLE INSTANCE **304**

PROVIDE, AS INPUT PARAMETERS TO THE TEACHING LLM, THE NEW SYNTHETIC DATA INSTANCE, AND THE CORRESPONDING FIRST NEW INSTANCE LABEL, ALONG WITH AN INSTRUCTION TO GENERATE A NATURAL LANGUAGE EXPLANATION OF THE FIRST NEW INSTANCE LABEL WITH RESPECT TO THE NEW SYNTHETIC DATA INSTANCE **306**

PROVIDE, AS INPUT PARAMETERS TO THE TEACHING LLM, THE NATURAL LANGUAGE EXPLANATION OF THE FIRST NEW INSTANCE LABEL, ALONG WITH AN INSTRUCTION TO GENERATE A SECOND NEW INSTANCE LABEL CORRESPONDING TO THE NEW SYNTHETIC DATA INSTANCE BASED ON THE NATURAL LANGUAGE EXPLANATION OF THE FIRST NEW INSTANCE LABEL **308**

OBTAIN, THE SECOND NEW INSTANCE LABEL CORRESPONDING TO THE NEW SYNTHETIC DATA INSTANCE GENERATED BY THE TEACHING LLM AND ADD THE NEW SYNTHETIC DATA INSTANCE AND THE CORRESPONDING SECOND NEW LABEL INSTANCE TO THE SYNTHETIC DATA **310**

**END**

*FIG. 3*

402

400
EXAMPLE OF ENTERPRISE DATA
CLASSIFIED BY FIELD ML MODEL

**Input: Records in .csv**

| | A | B | D | E | F | G | H |
|---|---|---|---|---|---|---|---|
| | date | text | NORMALIZED_GF | currency | latitude | longitude | city |
| | 19-03-2022 | Replaced all light bul | 10000 | CNY | 39.9042 | 116.4074 | Beijing |
| | 28-02-2022 | Upgraded our HVAC | 50000 | USD | 51.5074 | -0.1278 | London |
| | 09-03-2022 | Purchased 100 renev | 20000 | CAD | 45.5017 | -73.5673 | Montreal |
| | 07-04-2022 | Reserved airfare for | 10000 | JPY | 35.6762 | 139.6503 | Tokyo |

404

**Output: Classification + Explanation**

| date | text | NORMALIZED_GF | currency | latitude | longitude | city | country | prediction | justifications |
|---|---|---|---|---|---|---|---|---|---|
| 19-03-2022 | Replaced all light bul | 10000 | CNY | 39.9042 | 116.4074 | Beijing | China | A: Scope 2 | Replacing all light bulbs in facili |
| 28-02-2022 | Upgraded our HVAC | 50000 | USD | 51.5074 | -0.1278 | London | United Kin | A: Scope 2 | Upgrading HVAC systems to be |
| 09-03-2022 | Purchased 100 renev | 20000 | CAD | 45.5017 | -73.5673 | Montreal | Canada | A: Scope 2 | The purchase of renewable en |
| 07-04-2022 | Reserved airfare for | 10000 | JPY | 35.6762 | 139.6503 | Tokyo | Japan | A: Scope 3 | The reserved airfare for 5 exec |

*FIG. 4*

**500**
PROMPT ENGINEERING WITH
TEACHING LLM TO GENERATE SYNTHETIC
DATA

**502**
Context
setting

> Prompt
> Your task is to help a company in identifying the correct emissions class for the statement describing expenses embedded in triple backticks. Correct answer is either Scope 1, Scope 2, Scope 3.
> Remember that purchasing fuel like petrol, diesel, or chemicals, etc. Is Scope 1.
> Upgrading HVAC systems for energy system, solar, wind, and other purchases that relate to electricity are Scope 2.
> Traveling of employees in airfare, ship, or road is Scope 3. Purchasing electric vehicles is Scope 3. Remember, as per GHG protocol, there are 15 categories in Scope 3. So when the answer is Scope 3, please also state which category it belongs to.
>
> Learn from the examples below:

**504**
Few shot
examples

> Q: Bought 100 renewable energy certificates for our operations
> A: Scope 2
> Q: Purchased 5000 gallons of diesel fuel for our transportation fleet
> A: Scope 1
> Q: Reserved airfare for 5 executives to attend a meeting
> A: Scope 3, Category: Employee commuting

**506**
Categorization
and
Explanation

> Prompt: Q: ' ' 'The company leased office space in a commercial building for its regional headquarters.' ' '
> LLM response: **Scope 3**; Category: **Upstream leased assets** and **downstream transportation and distribution.**
> Prompt: Justify in two or three sentences as to why, as per GHG protocol, the data entry above falls under Scope 3 emissions and the categories you have identified.
> LLM response: The leased office space is an upstream leased asset because it is operated and leased by the reporting company (lessee). It **falls outside the company's direct control** and is **not included in the company's Scope 1 (direct emissions) or Scope 2 (indirect emissions** from purchased energy) inventories.
> The leased office space is **an upstream leased asset** because it is operated and leased by the reporting company (lessee). The emissions associated with operating and maintaining this leased office space contribute to the company's overall carbon footprint. These emissions are relevant to the business goals but are not directly owned or controlled by the company.
> In this case, the company's use of the leased office space involves **downstream transportation and distribution** because it affects the flow of information, people, and resources within the company's operations. The emissions associated with managing and maintaining the office space contribute to the company's overall environmental impact.

*FIG. 5*

Computing
System
600

608
Output Device(s)

604
Non-Persistent
Storage

602
Computer Processor(s)

606
Persistent Storage

612
Communication
Interface

610
Input Device(s)

*FIG. 6A*

620
Network

622
Node X

○ ○ ○

624
Node Y

626
Client Device

*FIG. 6B*

Europäisches
Patentamt

European
Patent Office

Office européen
des brevets

# EUROPEAN SEARCH REPORT

**Application Number**

EP 24 18 4674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARIAN ASKARI ET AL: "Generating Synthetic Documents for Cross-Encoder Re-Rankers: A Comparative Study of ChatGPT and Human Experts", ARXIV.ORG, CORNELL UNIVERSITY LIBRARY, 201 OLIN LIBRARY CORNELL UNIVERSITY ITHACA, NY 14853, 3 May 2023 (2023-05-03), XP091500626, * abstract; sections 3, 4.2, 5 * | 1-12 | INV. G06N20/00 G06F40/10 G06N3/0455 |
| A | QIJIONG LIU ET AL: "A First Look at LLM-Powered Generative News Recommendation", ARXIV.ORG, CORNELL UNIVERSITY LIBRARY, 201 OLIN LIBRARY CORNELL UNIVERSITY ITHACA, NY 14853, 4 June 2023 (2023-06-04), XP091528405, * abstract; sections 3, 4; figures 1, 4 * | 1-12 | |
| A | SHESHERA MYSORE ET AL: "Large Language Model Augmented Narrative Driven Recommendations", ARXIV.ORG, CORNELL UNIVERSITY LIBRARY, 201 OLIN LIBRARY CORNELL UNIVERSITY ITHACA, NY 14853, 4 June 2023 (2023-06-04), XP091529597, * abstract; section 3, 4; figure 3 * | 1-12 | TECHNICAL FIELDS SEARCHED (IPC) G06N G06F |

-/--

The present search report has been drawn up for all claims

| Place of search | Date of completion of the search | Examiner |
|---|---|---|
| The Hague | 21 November 2024 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 18 4674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RUIXIANG TANG ET AL: "Does Synthetic Data Generation of LLMs Help Clinical Text Mining?", ARXIV.ORG, CORNELL UNIVERSITY LIBRARY, 201 OLIN LIBRARY CORNELL UNIVERSITY ITHACA, NY 14853, 10 April 2023 (2023-04-10), XP091481002, * abstract; sections 4; figure 1 * | 1-12 | |
| A | ALEXEY KURAKIN ET AL: "Harnessing large-language models to generate private synthetic text", ARXIV.ORG, CORNELL UNIVERSITY LIBRARY, 201 OLIN LIBRARY CORNELL UNIVERSITY ITHACA, NY 14853, 2 June 2023 (2023-06-02), XP091527666, * abstract; sections 4, 5; figure 1 * | 1-12 | |

**TECHNICAL FIELDS SEARCHED (IPC)**

The present search report has been drawn up for all claims

| Place of search | Date of completion of the search | Examiner |
|---|---|---|
| The Hague | 21 November 2024 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Patent documents cited in the description**

- US 63510287 B